# EUROPEAN PATENT APPLICATION

(11) **EP 2 515 548 A1**
(43) Date of publication of application: **24.10.2012**
(21) Application number: 12153147.9
(22) Date of filing: 30.01.2012
(51) Int. Cl.: H04N 21/2187, H04N 21/2343, H04N 21/81

(54) **A competition tracking system**

(30) Priority: 20.04.2011 TR 201103856
(71) Applicant: KREA ICERIK HIZMETLERI VE PRODUKSIYON ANONIM SIRKETI, Istanbul (TR)
(72) Inventor: Turel, Ugur, 34353 ISTANBUL (TR)
(74) Representative: Iskender, Ibrahim

(57) **Abstract**

This invention is related to a competition tracking system (1) which enables the tracking of the coordinates and motions of the players on the field by processing the competition images captured by the cameras (2) and viewing the motions of these players as animation. In the competition tracking system (1), which is the subject matter of the invention, the user can watch the animations of the live broadcast or previously broadcasted competitions by a smart phone or tablet computer and can access the statistics relevant to the players.

## Description

### Technical Field

This invention is related to a competition tracking system which enables the tracking of the coordinates and motions of the players by processing the competition images captured by the cameras and viewing as animation on a device such as a smart phone or tablet pc preferably in two dimensions (2D) symbolically.

### Previous Technique

Sports competitions are tracked by using numerous number of cameras. The images taken from these cameras are processed and transmitted to the receivers and this way, the competitions are watched as online or offline. In the competitions or matches, the performances of the teams and the players influence the score of the match directly. The managers and the trainers of the teams develop their tactics as based on the performances and statistics of the players. Moreover, the performance of the players and teams is an issue which attracts the attention of the viewers and which they want to know about. Various systems are used for determining the performances of the teams and the players, keeping the statistics and graphing their success. The players in the match are tracked by using various systems. This tracking is generally performed for obtaining information such as how much position did such player change, his speed etc. This data, together with the images captured by the camera, is transmitted to the receiver devices. As a result some information about the players is also captured together with the broadcast of the match. When the broadcasting companies broadcast the competitions, they track the performances of the players in order to bring the pleasure of watching to the forefront and they use such information for this purpose.

Today, the most widespread tool for watching the sports competitions is television. Many people watch the sports competitions from their televisions. Besides television, there are some applications for watching sports competitions as online or offline. In some of these applications, it is targeted to watch these sports competitions on the computers as online through internet. In these applications, the broadcasting company broadcasts the information relevant to the match over the web server and the users connect to this server to watch the broadcast. In another application, sports competitions are watched through mobile phones. In this application, the viewers can watch the sports match over the mobile telephone under a membership. In these applications, the viewers watch the camera images related to the sports match. In these applications, there is no system where the viewers can watch the sports competitions as two dimensional animation and narration. Again in such applications, a system, where the motions of each player during the match are displayed, is not mentioned.

In the United States patent document no US2006070097, a data distribution system that makes it possible to watch the content of a sports competition whenever desired, is mentioned. In this method; the images of the match are processed, the location data is obtained, data is kept on various memories and sent to the clients and animations from this data are formed on the screen.

In the United States patent document no US2008192116, a system and method that makes it possible to track and identify a sports competition and capture the motion of more than one player as real time and discriminate the teams is mentioned. The sports event can be re-generated with the three dimensional computer graphics by using the location data of the players' body joints and parts captured.

### Short Description of the Invention

The purpose of this invention is; to achieve a competition tracking system that makes it possible to process the coordinates of the players in a sports match, the information relevant to the match, the events taking place during the match and to transfer these online to the users.

Another purpose of this invention is to achieve a competition tracking system where a two dimensional animation is realized as based on the coordinates of the players in a match.

Another purpose of this invention is to achieve a competition tracking system which makes it possible for the users to watch animations related to the sports competitions as online or offline.

Another purpose of this invention is to achieve a competition tracking system which shows the motions of the players with animations by combining the audio narration with the camera images.

Another purpose of this invention is to achieve a competition tracking system which makes it possible to synchronize the camera images, speaker's narration and the written narration relevant to the match and to watch all these as synchronized.

### Detailed Description of the Invention

A competition tracking system realized in order to achieve the purpose of this invention is shown in the attached figure and;

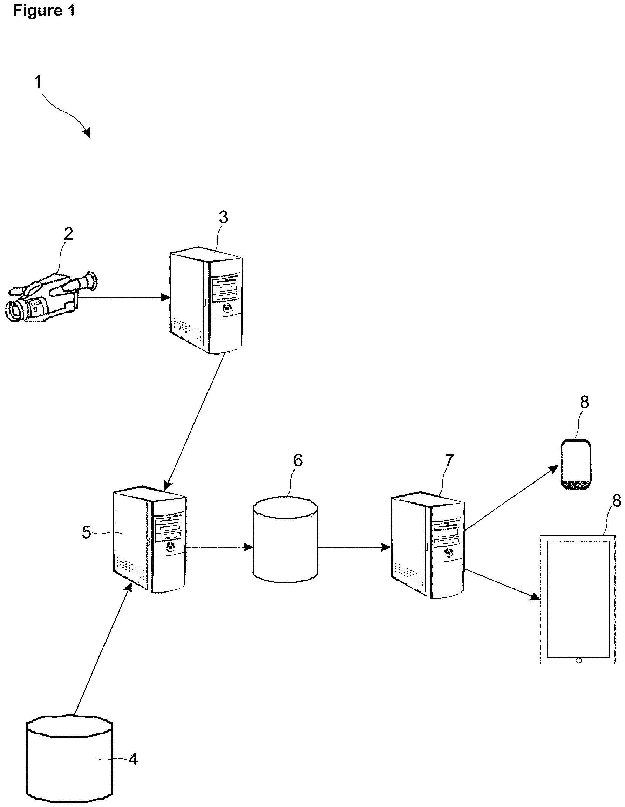

Figure 1 - is the schematic appearance of the competition tracking system which is the subject matter of the invention.
Figure 2- is the view of the competition on the device.

The parts in the figure are numbered and are given below.
1- Competition tracking system
2- Camera
3- Field server
4- Field database
5- Main server
6- Main database
7- Batch server
8- Device

The competition tracking system (1), which is the subject matter of the invention contains;
- at least one camera (2) tracking the competition as online and capturing the images,
- at least one field server (3) to process the images captured by the camera (2) and to determine the coordinates of each player, referee and the ball and send the location data,
- at least one field database (4) where online narration relevant to the competition and the events during the competition are entered into,
- at least one main server (5) combining and synchronizing the location data taken from the field server (3) with the data received from the field database (4) and sending the data array created,
- at least one main database (6) where the data transmitted from the main server (5) is recorded, and
- at least one batch server (7) which takes the data group from the main database (6) and sends such to the user for the preferred duration as and when the user desires to access the data,
- a device (8), preferably such as a smart telephone or tablet computer, that makes it possible for the user to watch the competition as animation.

The images of the match are captured by the camera (2). The positions and motions of each player on the field are tracked and recorded by the camera (2). Motions, instant positions, transpositions of players during the game are tracked by the camera (2). The field server (3) works in coordination with the camera (2) which is located in the field (hall, stadium, etc.). The field server (3) processes and parses all the data captured by the camera (2). The images of the match taken from the camera (2) are processed by the field server (3) and the coordinates of each player, referee and the ball (position data) are obtained. The field server (3) determines the coordinates and the direction of each player, referee and ball owing to the images taken from the camera (2).

The narrations of the commentator who commentates the match as live are entered into the field database (4). Moreover, the events (passes on target, misplaced passes, shots on target, yellow cards etc.) which take place in the match are entered into the field database (4) simultaneously with the match by the operators who watch the match as live. For example, "a pass on target from Ali no 7 to Ahmet no 10" is entered into the field database (4) as "7 pass 10". In the preferred application of the invention, the statistics relevant to the players and/or teams (the rate of passes on target, number of fouls etc.) are created from the events that are entered into the field database (4) and these events are taken from the field database (4) and converted into meaningful sentences automatically by the server (5) and match narration is created. Different narrations are found on the main server (5) for each match event entry. The event data entered by the operators are converted into meaningful sentences by the random narrations taken by the main server (5). For example, when the operator enters the data "7 pass 10" into the field database, the main server (5) converts the match narration into "a pass on target from Ali no 7 to Ahmet no 10". In case the same data is reentered, the main server (5) converts it into a narration preferably different from the previous one, such as "a magnificent pass from Ali no 7 to Ahmet no 10". There are different narrations on the main server (5) for each event and the match narration is created by the random selection is made each time for the event data and the match narration is created. The main server (5) preferably creates the match narration as text. The main server (5) controls the score and status data from the information entered by the operator at the preferred periods and transmits such information to the users as up to date.

The main server (5) receives the position data transmitted from the field server (3) and the event data from the field database (4) simultaneously. Such data is joined on the main server (5) by synchronization of the time. The synchronized data created on the main server (5) are saved to the main field database (6). The synchronization of data starts with the start information of the match. Following this information, data is started to be taken simultaneously from the field server (3) and the field database (4). The difference between the time information on the data received is calculated at the start of the match and is used as the synchronization value throughout the match. The main server (5) joins the data received from the field server (3) and the field database (4) as based on the synchronization value calculated. The main server (5) synchronizes the images, audios and narration data relevant to the match. The images and the audios and the narrations operate simultaneously owing to the main server (5).

Different narration templates relevant to the events which might take place in the match are saved to the main server (5). The main server (5) matches up the event and/or comment data transmitted to itself with the narration template and creates the narration. For example; the main server (5) creates the narration of "a pass on target from Ali no 7 to Ahmet no 10" from the data "7 pass 10" by using the narration template. In order not to use the same narration in case of recurrence of the event, there are many narration templates allocated for each event. Each time, the main server (5) selects randomly and uses one of the defined narration templates for the event realized. This narration template selected is saved to the main database (6).

In the preferred application of the invention, different effects are defined for different events on the main server (5). For example, there are many visual and/or audio effects for various events such as the cheer of the fans when a "goal" is scored, the image of a red card when a red card is shown. This way, the match animation is more exciting by the audio and/or visual effects selected as based on the events occurring. A table is created on the main database (6) for each match, which keeps the name and the position and event data of the match (For example D-20110220-115-BJK-FEN). This way, the data for each match are kept on separate tables. The main server (5), after compiling and synchronizing the data taken from the field server (3) and the field database (4), saves these to the main database (6). This way, all types of data related to the competitions is found on the main database (6) in a synchronized manner. There is a table for each match on the main database (6) and all the data relevant to that match are saved to this table and/or the sub-tables of this table. All the images (animation) of the match, audio narration, written narration, audio and/or visual effects relevant to the events on the main database (6) are in a synchronized manner. The main database (6) also keeps all the data relevant to the matches played previously other than the one played at that instant. This way, the user accesses the animations and data of the previous competitions over the main database (6).

In the competition tracking system (1), which is the subject matter of the invention, the images of the match are transferred to the device (8) preferably over the batch server (7). The batch server (7) takes the data from the main database (6) and transfers these to the device (8) which is followed over the user's data. Owing to the batch server (7), the user accesses the data uninterruptedly. For the uninterrupted access of the user to the data, the batch server (7) transfers the data for the preferred duration (for example for 5 minutes) over itself from the main database (6). The data received from the main database (6) is saved to the temporary memory of the batch server (7).

When any demand is received by the batch server (7); preferably 5 minutes of the data including that part of the match requested by the user is taken from the main database (6) and it is kept at the temporary memory as a package. When a second demand is received, if the requested data is in a package kept at the temporary memory, then it is provided from this package without accessing the main database (6). When a new package is needed, again a data of preferably 5 minutes is taken from the main database (6) and a new package is created in the temporary memory of the batch server (7). Those which cannot be read (watched) from the animation packages in the batch server (7) are deleted from the temporary memory after the preferred time.

The device (8) is any electronic device (mobile phone, smart phone, tablet pc, computer) and converts the data sent from the batch server (7) into images. When the device (8) connects to the batch server (7), the data relevant to the match is downloaded as packages of short durations (for example 10 seconds). The data packages are continued to be downloaded and the match is continuously tracked. The sentences created by narration templates are shown as subtitles on the device (8). The position data and the players, referees and the ball are shown as two dimensional on the image of the field where the match is played.

Owing to the competition tracking system (1), which is the subject matter of the invention, live or previously broadcasted competitions are tracked, preferred parts of the competitions are tracked, the statistics of the competitions are accessed at any time desired, and important moments are marked on the time line and the marked moments can be watched.

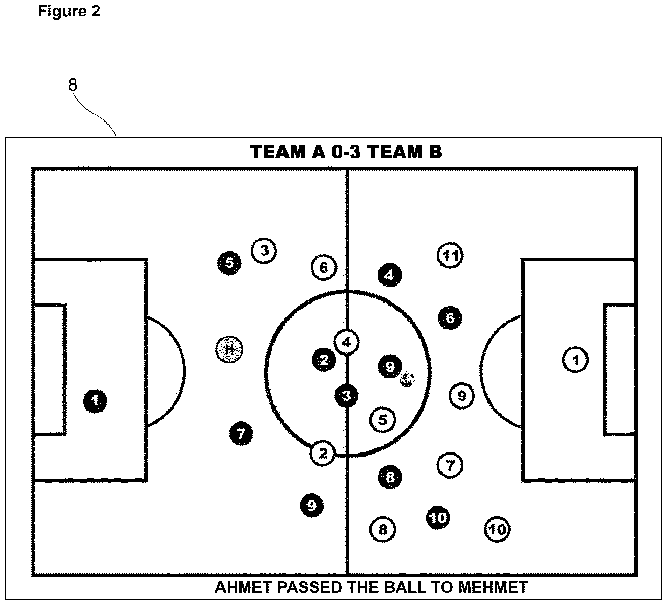

In the competition tracking system (1), which is the subject matter of the invention, the images taken from the field by the camera (2) are transferred to the field server (3). The field server (3) parses such images taken from the camera (2) as each player in the match and the referee. This way, the location (coordinate), displacement and motions of each player on the field is tracked by the field server (3). The field server (3) customizes the images taken from the camera (2) for each player. Owing to the field server (3), many statistics such as the running time of each player, the distance run by each player on the field are kept. After parsing the images taken from the camera (2), the field server (3) transfers all such data (the data of each player) to the main server (5). The main server (5), after receiving the data for each player in the match, places each player on 2 dimensional field image at their coordinates on the field. The main server (5) continuously receives data from the field server (3) and the field server (3) continuously receives data from the camera (2). The field server (3) parses each image taken from the camera (2) for each player and transfers these to the main server (5). When the main server (5) receives a new data relevant to the match and the players, it updates the field image according to the new coordinates of the players. In other words, the main server (5) moves and carries each player on the field to his last coordinate (position, place). This way, each player in the animation moves to his last position on the preferably 2 dimensional symbolic field image, as parallel to the motions of the real players on the field. In the competition tracking system (1), which is the subject matter of the invention, the top view of the match field is used as 2 dimensional symbolic figure. For example, the top view of a football field for the football matches or the top view of a basketball court for a basketball match is used as the 2 dimensional (2D) symbolic field image. In the competition tracking system (1), each player is preferably identified by round figures. In this application of the invention, the round figures moving on the field image represent the players on the field. (Figure 2)

In the competition tracking system (1), which is the subject matter of the invention, the data in the field database (4) and the field server (3) is transferred to the main server (5). The main server (5) takes the data of the players from the field server (3) and the live narrations of the operators and the event text entry data from the field database (4). The main server (5) takes the event text entries of the operators and converts these into meaningful sentences and uses such sentences in the narration and/or the narration text (subtitles). The main server (5), simultaneously receives the match narration data of the speakers. The main server (5) synchronizes the data received from the field server (3) and the field database (4). Owing to the main server (5), the match animation and the audio narration and the narration text operates simultaneously.

In the competition tracking system (1), which is the subject matter of the invention, the main server (5) converts the motions of the players on the field into animation by showing these with symbols on preferably 2 dimensional (2D) simulated field. The main server (5) controls the animation motions according to the motions of the real players. The main server (5), while making the animation of the match, also uses audio and written narrations simultaneously.

The main server (5) saves to the main database, all the data relevant to the match and the players, and the animated state of the match. This way, the match is accessed through the main database (6) simultaneously with the match played on the field. When the user desires to watch any match, the data of the relevant match is transferred to the batch server (7) from the main database (6) according to such demand of the user. The user watches the match by connecting to the batch server (7) through a device such as a smart phone preferably or tablet pc.

In the competition tracking system (1), which is the subject matter of the invention, the user can access all the match data on the main database (6). This way, the user can watch the live broadcast competitions as well as previously broadcasted competitions. The user can watch the competitions starting from the preferred time frame. Again, the user can access the statistics of the preferred match.

In an alternative application of the invention, the user connects directly to the main database (6) through the device (8) and watches the data of the match by downloading from here. In this application, the animation images of the match are watched as independent of the batch server (7).

Around these basic concepts; it is possible to develop many applications of the competition tracking system (1), which is the subject matter of the invention, and the invention cannot be restricted with the examples described herein, it is as indicated in the claims in principal.

## Claims

1. A competition tracking system (1) **containing;**
at least one camera (2) enabling the determination of the locations of specific objects by processing the images of the match and tracking such data after being processed, tracking the competition as online and capturing the images, at least one field server (3) to process the images captured by the camera (2) and to determine the coordinates of each player, referee and the ball and send the location data,
at least one field database (4) where the events occurring during the match are entered by the operators tracking the match as live; and is **characterized by;** at least one main server (5) joining and synchronizing the location data taken from the field server (3) with the oral and written narration data received from the field database (4), animating the players data received from the field preferably as 2 dimensional, and sending the data array created relevant to the match,
at least one main database (6) where the data transmitted from the main server (5) is recorded, and
at least one batch server (7) which takes the data group from the main database (6) and sends such to the user for the preferred duration as and when the user desires to access the data, and this way provides uninterrupted viewing of the match,
a device (8), preferably such as a smart telephone or tablet computer, that makes it possible for the user to watch the competition.

2. A competition tracking system (1) as in Claim 1, that is **characterized by** the field server (3) that works in coordination with the camera (2) which is located in the hall, stadium, court and similar fields where the match is played, that processes the match images taken from the camera (2) and obtains the coordinated of each player, referee and the ball.

3. A competition tracking system (1) as in one of the claim 1 or 2, that is **characterized by** the main server (3) that joins and synchronizes the location data transmitted from the field server (3) and the event data transmitted from the field database (4).

4. A competition tracking system (1) as in one of the claims above, that is **characterized by** the main server (5) where the different narration templates relevant to the events that might take place during the match are saved and matches the event and/or comment data transmitted to itself randomly with any of the identified narration templates and creates narration.

5. A competition tracking system (1) as in one of the claims above, that is **characterized by** the field server (3) that processes the match images taken from the camera (2) and enables the determination of the coordinates and the location of each player, referee and the ball.

6. A competition tracking system (1) as in one of the claims above, that is **characterized by** the field server (3) that determines the location of each player, referee and the ball and the direction of their motions owing to the images taken from the camera (2).

7. A competition tracking system (1) as in one of the claims above, that is **characterized by** the field database (4) and the main server (5) that enables the creation of the statistics relevant to the players and/or teams from the events that are entered into the field database (4) and that creates the match narration by converting these events into meaningful sentences.

8. A competition tracking system (1) as in one of the claims above, that is **characterized by** the main server (5) that takes the position data from the field server (3) and the event data from the field database (4) and synchronizes the times of such data and joins them.

9. A competition tracking system (1) as in one of the claims above, that is **characterized by** the main server (5) that compiles and synchronizes the data taken from the field server (3) and the field database (4) and then saves these to the main database (6).

10. A competition tracking system (1) as in one of the claims above, that is **characterized by** the main database (6) that stores all the data relevant to the previous sports matches as well as the matches that are played as of that instant and this way provides the user to access the animation and data relevant to the previous sports matches.

11. A competition tracking system (1) as in one of the claims above, that is **characterized by** the batch server (7) that takes the data from the main database (6) and transfers these to a device (8) such as a smart phone or tablet computer over which the user tracks the data.

12. A competition tracking system (1) as in one of the claims above, that is **characterized by** the batch server (7) that transfers the data to itself from the main database (6) for the preferred duration so that the user accesses the data uninterruptedly.

13. A competition tracking system (1) as in one of the claims above, that is **characterized by** the batch server (7) that keeps the data taken from the main server (6) in its temporary memory.

14. A competition tracking system (1) as in one of the claims above, that is **characterized by** the batch server (7) that takes from the main database (6) preferably 5 minutes of the data including that part of the match requested by the user when any demand is received from the user and keeps it at the temporary memory as a package.

15. A competition tracking system (1) as in one of the claims above, that is **characterized by** the batch server (7) that provides the requested data from the package if it is in a package kept at the temporary memory, without accessing the main database (6) when a second demand is received from the user.

16. A competition tracking system (1) as in one of the claims above, that is **characterized by** the device (8), which is any electronic device such as a mobile telephone, smart telephone, tablet pc, computer, that converts the data sent by the batch server (7) into visuals.

17. A competition tracking system (1) as in one of the claims above, that is **characterized by** the main server (5) that positions each player in the match after receiving data of such player, on the field image in his position preferably as 2 dimensional.

18. A competition tracking system (1) as in one of the claims above, that is **characterized by** the main server (5) that updates the field image according to the new coordinates of the players each time it receives a new data relevant to the match and the players, in other words, it moves and carries each player on the field to his last coordinate.

19. A competition tracking system (1) as in one of the claims above, that is **characterized by** the main server (5) that converts the motions of the players on the field into animation by showing these with symbols on preferably 2 dimensional (2D) simulated field.

20. A competition tracking system (1) as in one of the claims above, that is **characterized by** the device (8) such as a smart telephone or tablet computer that enables the user to watch as animation the live broadcast or previously broadcasted competitions by connecting to the batch server (7)
